# EUROPEAN PATENT APPLICATION

(11) **EP 4 778 701 A1**
(43) Date of publication of application: **22.07.2026**
(21) Application number: 24865336.2
(22) Date of filing: 04.09.2024
(51) Int. Cl.: B29C 64/188, B29C 64/118, B29C 64/268, B29C 64/393, B33Y 10/00, B33Y 30/00, B33Y 50/02

(54) **METHOD FOR MANUFACTURING RESIN PRODUCT AND DEVICE FOR MANUFACTURING RESIN PRODUCT**

(30) Priority: 13.09.2023 JP 2023148515
(71) Applicant: DENSO CORPORATION, Kariya-shi, Aichi 448-8661 (JP)
(72) Inventor: OKUDA, Hideki, Kariya-shi, Aichi 448-8661 (JP)
(74) Representative: Kuhnen & Wacker Patent- und Rechtsanwaltsbüro PartG mbB
(86) International application number: PCT/JP2024/031722
(87) International publication number: WO 2025/057835

(57) **Abstract**

Disclosed is a method for manufacturing a resin product using a fused deposition modeling-type 3D printer (3), wherein a first molded body (71) is produced using a first resin that has laser light absorption properties using the 3D printer (3). In addition, a second molded body (81) is produced, using the 3D printer (3), so as to be laminated on the first molded body (71) by supplying a second resin that has laser light transmissivity to the surface of the first molded body (71). Then, the first molded body (71) and the second molded body (81) are welded to each other by irradiating laser light along a path that extends from the second molded body (81) side to the first molded body (71) through an irradiation region between the first molded body (71) and the second molded body (81).

## Description

### [Cross Reference to Related Applications]

The present international application claims the benefit of Japanese Patent Application No. 2023-148515, filed with the Japan Patent Office on September 13, 2023, the entire disclosure of which is incorporated herein by reference.

### [Technical Field]

The present disclosure relates to a technique for manufacturing a resin product using a three-dimensional printer.

### [Background Art]

Conventionally, a technique for manufacturing a resin product having a three-dimensional shape using a fused deposition modeling type (that is, an FDM type) three-dimensional printer (that is, a 3D printer) is known (for example, see PTL 1).

Specifically, a resin product is manufactured by melting a resin, which is the material of the resin product, at high temperature, outputting the molten resin from a modeling nozzle in a string-like shape, and then laminating the string-like sections to form a three-dimensional shape.

### [Citation List]

### [Patent Literature]

PTL 1: JP 2018-62128 A

### [Summary of the Invention]

However, as a result of detailed study by the inventors, the following issues were found in the conventional technique.

As described above, in a case where an FDM-type 3D printer is used to supply and laminate a resin in a string-like shape (e.g., a cylindrical shape) to form a three-dimensional shape, there are few interfaces (that is, joined parts) where the laminated string-like sections are in contact with each other. For this reason, the strength at the interface is low, resulting in a problem where the strength of the resin product decreases.

Furthermore, in a case where a resin is laminated in a string-like shape, the state of the string-like sections in a lower layer (for example, the extent of solidification) is not constant, which makes the adhesion state of the string-like sections inconsistent, and for this reason, the strength at the interface, and consequently the strength of the resin product, sometimes becomes insufficient.

An object of an aspect of the present disclosure is to provide a technique that is capable of increasing the strength of a resin product produced using a fused deposition modeling-type three-dimensional printer.
a) An aspect of the present disclosure relates to a method for manufacturing a resin product using a fused deposition modeling three-dimensional printer that produces a molded body by supplying a molten resin in a string-like shape from a modeling nozzle.

In the method for manufacturing a resin product, a first molded body is produced using a first resin having laser light absorption properties, and a second molded body is produced so as to be laminated on the first molded body by supplying a second resin having laser light transmissivity to a surface of the first molded body. Then, the first molded body and the second molded body are welded to each other by irradiating laser light along a path that extends from the second molded body side to the first molded body through an irradiation region between the first molded body and the second molded body.

As a result of such a configuration, the strength of a resin product produced using a fused deposition modeling-type three-dimensional printer can be increased.

That is, in the present disclosure, the first molded body can be effectively heated by irradiating laser light along a path that extends from the second molded body side to the first molded body through an irradiation region between the first molded body and the second molded body. As a result, it is possible to mainly melt the surface of the first molded body. Further, because the second molded body is laminated on the first molded body, the heat of the heated first molded body is transferred to the second molded body. Consequently, because the surface of the second molded body can be heated, the surface of the second molded body can also be melted. In this way, as a result of the first molded body and the second molded body melting, the first molded body and the second molded body can be welded together.

Further, by welding the first molded body and the second molded body in this way, a resin product is obtained in which the first molded body and the second molded body are firmly joined to each other.

b) Another aspect of the present disclosure relates to a manufacturing device for a resin product using a fused deposition modeling three-dimensional printer that produces a molded body by supplying a molten resin in a string-like shape from a modeling nozzle.

In the manufacturing device for a resin product, the three-dimensional printer includes: a molding control unit that controls an operation of the modeling nozzle, and produces a first molded body by supplying a first resin that has laser light absorption properties; and a lamination control unit that controls an operation of the modeling nozzle, and produces a second molded body that is laminated on the first molded body by supplying a second resin that has laser light transmissivity to a surface of the first molded body.

The manufacturing device includes a laser device having a laser irradiation unit that irradiates laser light.

The laser device includes a laser control unit that controls an operation of the laser irradiation unit, and welds the first molded body and the second molded body to each other by irradiating laser light along a path that extends from the second molded body side to the first molded body through an irradiation region between the first molded body and the second molded body.

As a result of such a configuration, the strength of a resin product produced using a fused deposition modeling-type three-dimensional printer can be increased.

That is, in the present disclosure, the first molded body can be effectively heated by irradiating laser light along a path that extends from the second molded body side to the first molded body through an irradiation region between the first molded body and the second molded body. As a result, it is possible to mainly melt the surface of the first molded body. Further, because the second molded body is laminated on the first molded body, the heat of the heated first molded body is transferred to the second molded body. Consequently, because the surface of the second molded body can be heated, the surface of the second molded body can also be melted. In this way, as a result of the first molded body and the second molded body melting, the first molded body and the second molded body can be welded together.

Further, by welding the first molded body and the second molded body in this way, a resin product is obtained in which the first molded body and the second molded body are firmly joined to each other.

c) Yet another aspect of the present disclosure relates to a manufacturing device for a resin product using a fused deposition modeling three-dimensional printer that produces a molded body by supplying a molten resin in a string-like shape from a modeling nozzle.

In the manufacturing device for a resin product, as the three-dimensional printer, provided are: a molding device having a molding control unit that controls an operation of the modeling nozzle, and produces a first molded body by supplying a first resin that has laser light absorption properties; and a lamination device having a lamination control unit that controls an operation of the modeling nozzle, and produces a second molded body that is laminated on the first molded body by supplying a second resin that has laser light transmissivity to a surface of the first molded body,

The lamination device includes a laser device having a laser irradiation unit that irradiates laser light. The laser device includes a laser control unit that controls an operation of the laser irradiation unit, and welds the first molded body and the second molded body to each other by irradiating laser light along a path that extends from the second molded body side to the first molded body through an irradiation region between the first molded body and the second molded body.

As a result of such a configuration, the strength of a resin product produced using a fused deposition modeling-type three-dimensional printer can be increased.

That is, in the present disclosure, the first molded body can be effectively heated by irradiating laser light along a path that extends from the second molded body side to the first molded body through an irradiation region between the first molded body and the second molded body. As a result, it is possible to mainly melt the surface of the first molded body. Further, because the second molded body is laminated on the first molded body, the heat of the heated first molded body is transferred to the second molded body. Consequently, because the surface of the second molded body can be heated, the surface of the second molded body can also be melted. In this way, as a result of the first molded body and the second molded body melting, the first molded body and the second molded body can be welded together.

Further, by welding the first molded body and the second molded body in this way, a resin product is obtained in which the first molded body and the second molded body are firmly joined to each other.

In addition, because the present disclosure includes the molding device and the lamination device, the molding device can produce the first molded body, and the lamination device can produce the second molded body so as to be laminated on the first molded body. This provides an advantage of improving the degree of freedom of the manufacturing process.

### [Brief Description of the Drawings]

Fig. 1A is a front view showing a manufacturing device for a resin product according to a first embodiment, and Fig. 1B is a plan view showing a configuration of a 3D printer used in the manufacturing device for a resin product.
Fig. 2 is a block diagram showing an electrical configuration of a manufacturing control device and the like in the first embodiment.
Figs. 3A, 3B, and 3C are perspective views showing a method for manufacturing a resin product according to the first embodiment.
Figs. 4A, 4B, and 4C are front views showing enlarged the main parts of the method for manufacturing a resin product according to the first embodiment.
Fig. 5 is a flowchart showing the processing performed by a manufacturing control device of the first embodiment.
Fig. 6 is a perspective view showing a laminate according to a first modification.
Fig. 7A is a front view showing a modeling nozzle provided with a laser irradiation unit and an injection nozzle according to a third modification, and Fig. 7B is a plan view showing the modeling nozzle provided with the laser irradiation unit and the injection nozzle.
Fig. 8 is a perspective view showing a method for manufacturing a resin product according to a second embodiment.
Fig. 9 is a front view showing a manufacturing device for a resin product according to a third embodiment.

### [Description of the Embodiments]

Hereinafter, exemplary embodiments of the present disclosure will be described with reference to the drawings.

### [1. First Embodiment]

In a first embodiment, a technique for manufacturing a resin product using a fused deposition modeling (that is, an FDM) type three-dimensional printer will be described.

### [1.1. Overall Configuration]

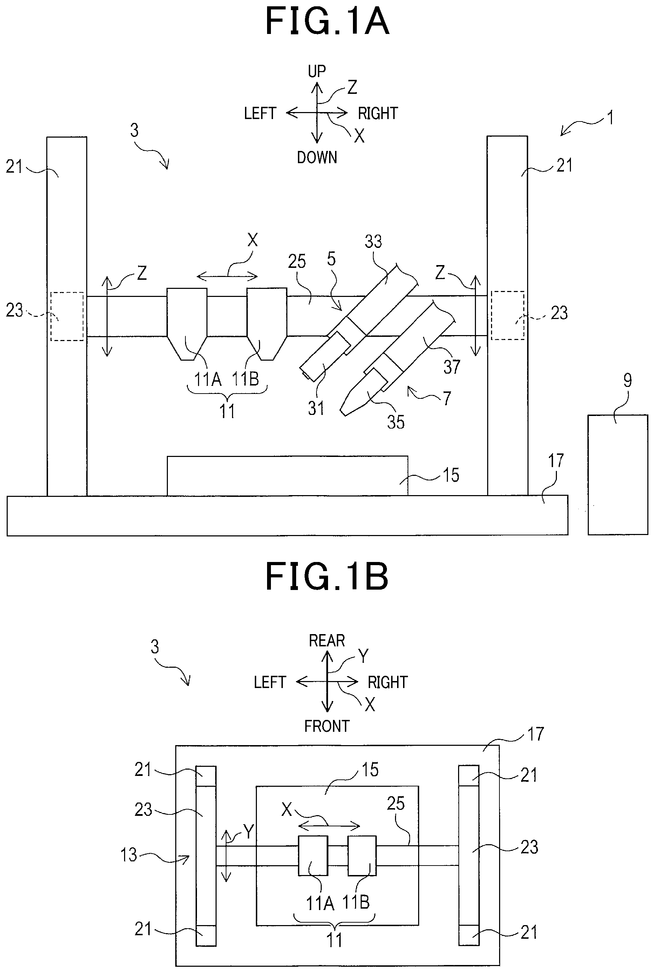

As shown in Fig. 1A, a manufacturing device for a resin product (referred to as manufacturing device below) 1 according to the first embodiment mainly includes: a configuration (referred to as 3D printer below) 3 that functions as a fused deposition modeling-type three-dimensional printer; a configuration (referred to as laser device below) 5 for irradiating laser light; a configuration (referred to as gas device below) 7 for injecting high-pressure gas; and a manufacturing control device 9 that controls an operation of the manufacturing device 1.

Hereinafter, the configurations of the manufacturing device 1 will be described.

### <3D Printer>

As shown in Fig. 1B, the fused deposition modeling-type 3D printer 3 includes, as is well known, a modeling nozzle 11 that discharges a resin from the front end, a moving mechanism 13 that moves the modeling nozzle 11 in a three-dimensional direction, a modeling stage 15 on which a molded body manufactured from the resin is placed, a base 17 that supports the modeling stage 15, and the like. Here, a case where two modeling nozzles 11A and 11B are used will be described as an example.

Note that the three-dimensional direction refers to the directions of the X-axis, Y-axis, and Z-axis of XYZ coordinates, which are Cartesian coordinates. The XY plane is a horizontal plane, and the Z-axis direction is a vertical direction.

As is well known, and although not shown, the modeling nozzle 11 includes a through hole that penetrates through in an axial direction, and a heater arranged around the through hole. The modeling nozzle 11 is configured so as to melt, for example, a solid resin material having a string-like shape referred to as a filament, which is supplied to the through hole from the outside as a result of heating by the heater, and then supply the molten resin material from an opening portion in a front end of the through hole.

Note that, in addition to a method that supplies a filament, a method of melting resin pellets and outputting the resin from the modeling nozzle 11 or the like can be adopted, and there is no particular limitation as long as the method is a fused deposition modeling-type method.

As the moving mechanism 13, because a known configuration used in the 3D printer 3 can be adopted, an example of the configuration will be described here.

For example, the moving mechanism 13 includes: four Z-axis members 21, which are pillars arranged at the four corners of the base 17 and extending in the Z-axis direction in a plan view from the Z-axis direction on an upper surface of the base 17 (see Fig. 1B); pillar-shaped Y-axis members (that is, a left and right pair of Y-axis members) 23 horizontally bridged along the Y-axis direction between two Z-axis members 21 on both sides in the Y-axis direction; and one pillar-shaped X-axis member 25 horizontally bridged along the X-axis direction between the left and right Y-axis members 23.

The Y-axis members 23 sandwiched between the pair of Z-axis members 21 are horizontally movable along the Z-axis direction. Note that the left and right pair of Y-axis members 23 move in the Z-axis direction in the same manner while maintaining a parallel state.

Although not shown, and as is well known, the movement of the Y-axis members 23 is configured so as to be performed by a motor, or gears and belts that transmit the driving force of a motor.

The X-axis member 25 sandwiched between the left and right pair of Y-axis members 23 is movable in the Y-axis direction on the surfaces of the Y-axis members 23. Although not shown, and as is well known, the movement of the X-axis members 25 is configured so as to be performed by a motor, or gears and belts that transmit the driving force of a motor.

The two modeling nozzles (that is, the first modeling nozzle 11A and the second modeling nozzle 11B) are attached to the X-axis member 25 so as to be movable in the X-axis direction. Although not shown, and as is well known, the movement of each modeling nozzle 11 is configured so as to be performed by a motor, or gears and belts that transmit the driving force of a motor.

Although a 3D printer in which each modeling nozzle 11 moves in the directions of the XYZ axis directions is described here as an example, various known configurations can be adopted as the configuration of the fused deposition modeling-type 3D printer. For example, a configuration in which each modeling nozzle 11 is movable in the Z-axis direction and the Y-axis direction, and the modeling stage 15 is moved in the Y-axis direction, can be adopted. Furthermore, a configuration in which each modeling nozzle 11 is movable in the X-axis direction and the Y-axis direction, and the modeling stage 15 is moved in the Z-axis direction, can be adopted. Alternatively, as is well known, an X-axis member 25 may be arranged between a left and right pair of Z-axis members 21, the Z-axis members 21 may be movable in the Y-axis direction, the X-axis member 25 may be movable in the Z-axis direction, and each modeling nozzle 11 may be movable in the X-axis direction.

Note that, although a case using two modeling nozzles 11 is described here, it is also possible to use a single modeling nozzle 11 as described later.

### <Laser Device>

As shown in Fig. 1A, the laser device 5 includes a laser irradiation unit 31 that irradiates laser light, and a first arm device 33 that moves the laser irradiation unit 31 in a three-dimensional direction.

As the first arm device 33, a multi-axis (for example, 6-axis) robot arm can be adopted, and the first arm device 33 is attached to the base 17.

The laser irradiation unit 31 is attached to a front end of the first arm device 33, and a three-dimensional position of the laser irradiation unit 31 and an irradiation direction of the laser light can be freely set by the operation of the first arm device 33.

For example, as described later, the laser irradiation unit 31 can be moved in the same direction as the moving direction of the second modeling nozzle 11B. Moreover, by adjusting the inclination of the laser irradiation unit 31, the direction in which the laser light is irradiated can be set to have a predetermined inclination (for example, an inclination that is inclined by a predetermined angle from the horizontal direction).

As the laser irradiation unit 31 (that is, the laser), solid-state lasers such as a glass laser, a ruby laser, a YAG laser, and a titanium-sapphire laser; gas lasers such as a He-Ne laser, a CO₂ laser, a rare-gas ion laser, and an excimer laser; and semiconductor lasers, and the like, can be selected as appropriate.

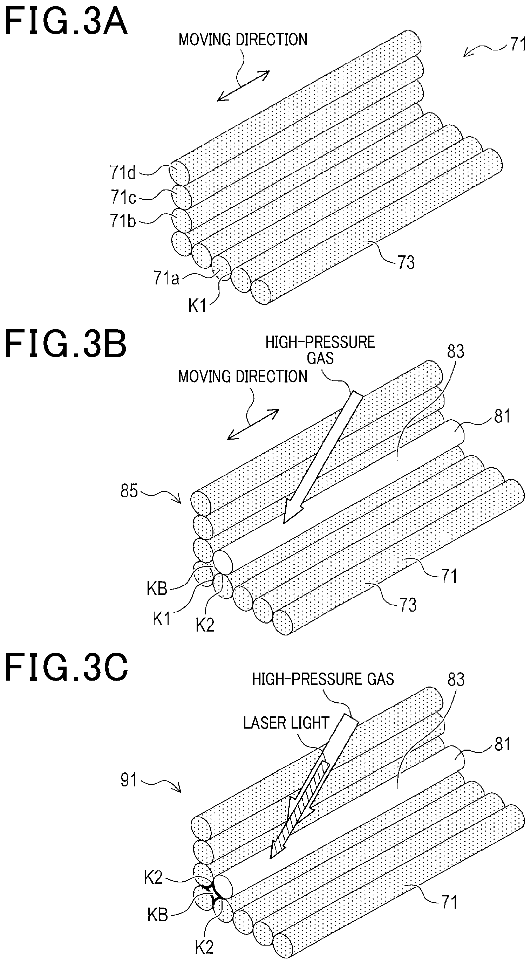

In addition, the laser irradiation unit 31 can be used at an output that takes into account the composition of the resin used in the resin product. That is, the laser irradiation unit 31 is used at an output that can melt the surface of the first molded body 71 (for example, see Fig. 3) which is the object to be heated by irradiating the laser light.

### <Gas Device>

As shown in Fig. 1A, the gas device 7 includes an injection nozzle 35 that injects high-pressure gas, and a second arm device 37 that can move the injection nozzle 35 in a three-dimensional direction. Note that the injection nozzle 35 is connected to a gas supply source (not shown) that supplies high-pressure gas.

As the second arm device 37, a multi-axis (for example, 6-axis) robot arm can be adopted, and the second arm device 37 is attached to the base 17.

The injection nozzle 35 is attached to a front end of the second arm device 37, and the three-dimensional position of the injection nozzle 35 and the injection direction of the high-pressure gas can be freely set by the operation of the second arm device 37.

For example, as described later, the injection nozzle 35 can be moved in the same direction as the moving direction of the second modeling nozzle 11B. Furthermore, by adjusting the inclination of the injection nozzle 35, the direction in which the high-pressure gas is injected can be set to have a predetermined inclination (for example, an inclination that is inclined by a predetermined angle from the horizontal direction).

Note that, as the pressure of the high-pressure gas, for example, a pressure that is 2 times atmospheric pressure or more (for example, 0.2 MPa or more in absolute pressure) can be adopted.

### [1-2. Electrical Configuration of Manufacturing Device]

Next, an electrical configuration of the manufacturing device 1 will be described.

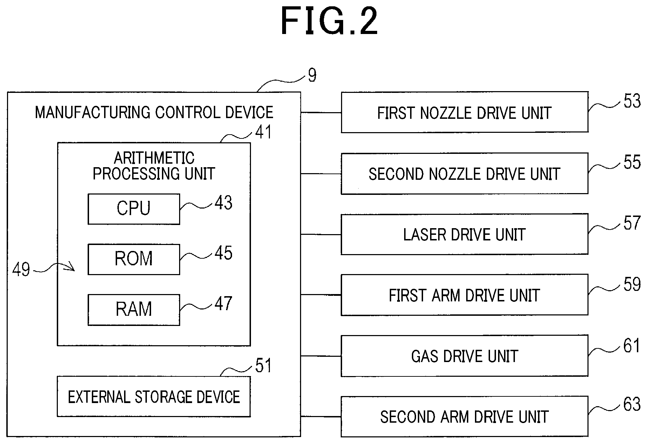

As shown in Fig. 2, the manufacturing control device 9 that controls the operation of the manufacturing device 1 includes an arithmetic processing unit 41 that performs various arithmetic processing relating to the operation and the like of the manufacturing device 1.

The arithmetic processing unit 41 is mainly configured by a microprocessor having a CPU 43 and semiconductor memory (hereinafter, referred to as memory 49), such as a ROM 45 and a RAM 47. Note that an external storage device 51 such as a flash memory or a hard disk may be provided.

Various functions of the arithmetic processing unit 41 are realized by the CPU 43 executing a program stored in a non-transitory, tangible recording medium. In this example, the memory 49 corresponds to the non-transitory, tangible recording medium in which the program is stored. In addition, by executing the program, a method corresponding to the program is executed.

The number of microprocessors constituting the arithmetic processing unit 41 may be one or more. Furthermore, the technique for realizing the various functions provided in the arithmetic processing unit 41 is not limited to software, and some or all of the elements may be realized by using one or more pieces of hardware. For example, when the above functions are realized by an electronic circuit, which is hardware, the electronic circuit may be realized by a digital circuit including a large number of logic circuits, an analog circuit, or a combination thereof.

Various actuators are connected to the manufacturing control device 9 to cause the manufacturing device 1 to perform operations.

For example, a first nozzle drive unit 53, a second nozzle drive unit 55, a laser drive unit 57, a first arm drive unit 59, a gas drive unit 61, a second arm drive unit 63, and the like are connected.

The first nozzle drive unit 53 is a circuit or the like that drives the first modeling nozzle 11A and, although not shown, and as is well known, includes a plurality of motors that drive the first modeling nozzle 11A, a heater that melts resin, and the like. Note that, examples of the motors include a motor that drives the Y-axis members 23 in the Z-axis direction, a motor that moves the X-axis member 25 in the Y-axis direction, a motor that drives the first modeling nozzle 11A in the X-axis direction, and a motor that drives a roller that supplies a filament.

The second nozzle drive unit 55 has the same configuration as that of the first nozzle drive unit 53, and is a circuit or the like that drives the second modeling nozzle 11B. The second nozzle drive unit 55, although not shown, and as is well known, also includes a plurality of motors that drive the second modeling nozzle 11B, a heater that melts resin, and the like.

The laser drive unit 57 is a circuit or the like for driving the laser irradiation unit 31 to irradiate laser light from the front end of the laser irradiation unit 31.

The first arm drive unit 59 is a circuit or the like that drives the first arm device 33.

The gas drive unit 61 is a circuit or the like that drives the injection nozzle 35 and controls a valve (not shown) to control the injection state of high-pressure gas (for example, carrying out injection and stopping injection).

The second arm drive unit 63, in a similar manner to the first arm drive unit 59, is a circuit or the like that drives the first arm device 33.

### [1.3 Manufacturing Method]

Next, a method for manufacturing a resin product performed using the manufacturing device 1 will be described.

### (First Step: Step of Producing First Molded Body)

In the first step, as shown in Fig. 3A, the first molded body 71 is produced using a first resin using the 3D printer 3 of the manufacturing device 1.

Specifically, a filament made of the first resin is firstly supplied to the first modeling nozzle 11A, and the first resin is melted by a heater.

The first resin is a resin having laser light absorption properties and has higher laser light absorption than a second resin. As the first resin, for example, a thermoplastic resin having a laser light transmittance of 5% or less can be used so that the absorption of the laser light that is used is high. For example, resins such as polyamide and polybutylene terephthalate, or those in which a coloring agent such as carbon black and various other additives are blended with such resins, can be selected as appropriate.

Then, the first modeling nozzle 11A is moved according to modeling data created in advance, and the molten first resin is supplied in a string-like shape (for example, a cylindrical shape) from the front end of the first modeling nozzle 11A onto the upper surface of the modeling stage 15.

Specifically, the first modeling nozzle 11A is moved along a moving direction (for example, the Y-axis direction) based on the modeling data, and the molten first resin is supplied from the first modeling nozzle 11A in a cylindrical shape. As the first resin that has been supplied gradually solidifies, a cylindrical portion (that is, a first cylindrical portion) 73 is formed so as to extend along the moving direction.

Similarly, another first cylindrical portion 73 is produced so as to be adjacent to the first cylindrical portion 73 that has been formed by supplying the first resin in a cylindrical shape from the first modeling nozzle 11A as the first modeling nozzle 11A moves.

As a result of repeating such an operation, a first layer 71a is formed in which adjacent first cylindrical portions 73 are joined at an interface (that is a first interface K1, which is an interface composed of the same kind of resin) having a predetermined width. That is, a plate-like horizontal section (that is, the first layer 71a, which is the first layer) in which a plurality of first cylindrical portions 73 are arranged in a planar direction is formed.

Thereafter, on the first cylindrical portion 73 of a portion of the first layer 71a (for example, the left end in Fig. 3A), a first cylindrical portion 73 is similarly laminated to produce a second layer 71b, and further, on the second layer 71b, a first cylindrical portion 73 is similarly laminated to produce a third layer 71c, and further, on the third layer 71c, a first cylindrical portion 73 is similarly laminated to produce a fourth layer 71d. Here, for ease of understanding, single first cylindrical portions 73 are described as an example for the second layer 71b to the fourth layer 71d, but it is not limited thereto, and the layers may be configured by a plurality of first cylindrical portions 73.

The first molded body 71 is produced as a result of such operations.

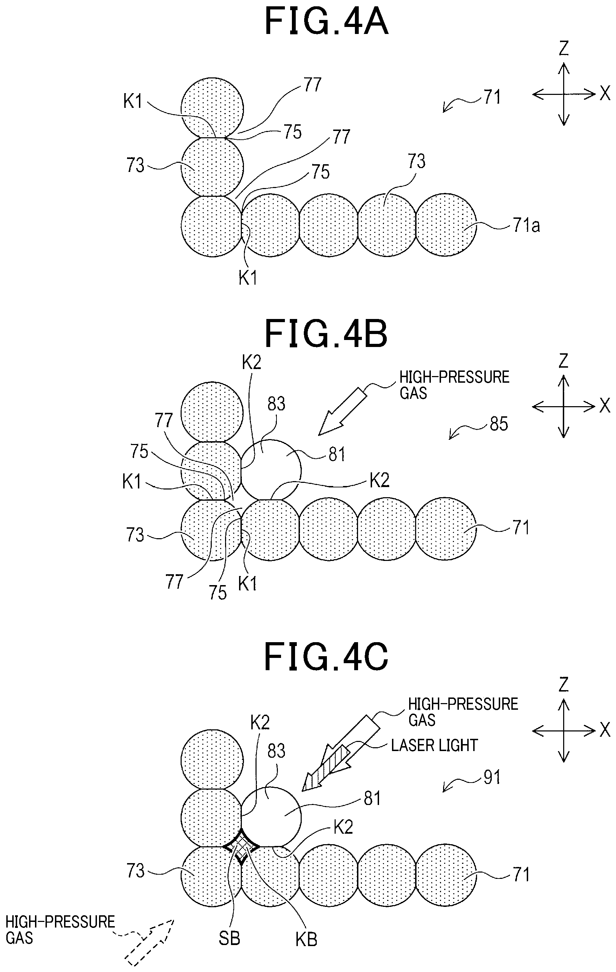

Specifically, as shown in an enlarged in Fig. 4A, the lower portion of the first molded body 71 (that is, the first layer 71a) has a plate-like shape in which a plurality of first cylindrical portions 73 extending along the moving direction (for example, the Y-axis direction) are arranged and joined in a direction perpendicular to the moving direction (for example, the X-axis direction).

Adjacent first cylindrical portions 73 are in contact with each other at a band-shaped first interface K1 as described above. That is, immediately after the first cylindrical portion 73 is formed, the molten first resin is soft during the solidifying stage, and therefore, adjacent first cylindrical portions 73 join at the first interface K1 having a constant width rather than at a single point. Note that the first interface K1 extends along a direction in which the first cylindrical portion 73 extends, that is, the moving direction of the first modeling nozzle 11A (for example, the Y-axis direction).

An upper end portion 75 of the first interface K1 of the first cylindrical portion 73 constituting the first layer 71a is exposed on the surface (for example, the upper surface) of the first molded body 71, and extends in the moving direction along the first interface K1. Further, between adjacent first cylindrical portions 73, a recessed portion (that is, a groove) 77 is formed along the upper end portion 75 of the first interface K1, and the groove 77 extends in the moving direction along the end portion 75 of the first interface K1.

Similarly, one end portion 75 on one side (that is, the right side in Fig. 4A) of the first interface K1 of the first cylindrical portion 73 arranged in a direction perpendicular to the first layer 71a is also exposed on the surface (for example, the right side surface) of the first molded body 71, and extends in the moving direction along the first interface K1. Further, between adjacent first cylindrical portions 73, a groove 77 is similarly formed along the end portion 75 of the first interface K1, and the groove 77 extends in the moving direction along the end portion 75 of the first interface K1.

### (Second Step: Step of Producing Second Molded Body)

In the second step, as shown in Fig. 3B, a second molded body 81 is produced on the surface of the first molded body 71 using a second resin using the 3D printer 3 of the manufacturing device 1.

Specifically, a filament made of the second resin is firstly supplied to the second modeling nozzle 11B, and the second resin is melted by a heater.

The second resin is a resin having laser light transmissivity and has a higher laser light transmittance than the first resin. As the second resin, a thermoplastic resin having a lower absorption property with respect to the laser light used than the first resin, such as a laser light transmittance of 25% or more, is used. For example, resins such as polyamide and polybutylene terephthalate, or resins in which a clarifying agent and various other additives having a sufficiently low absorption property with respect to the laser light used are blended with the resin, can be selected as appropriate.

Then, the second modeling nozzle 11B is moved according to modeling data created in advance, and the molten second resin is supplied in a string-like shape (for example, a cylindrical shape) from the front end of the second modeling nozzle 11B onto the upper surface of the first molded body 71.

That is, in a case where the second molded body 81 is laminated on the first molded body 71, as shown in enlarged in Fig. 4B, the second resin is supplied along the end portion 75 of the first interface K1 of the first molded body 71 in a shape covering the end portion 75 and the groove 77 of the first interface K1.

Specifically, in the same manner as the first modeling nozzle 11A, the second modeling nozzle 11B is moved along the moving direction (for example, the Y-axis direction) based on the modeling data, and the molten second resin is supplied from the second modeling nozzle 11B in a cylindrical shape. As this supplied second resin gradually solidifies, a cylindrical section (that is, a second cylindrical portion) 83 adopts a shape extending along the moving direction, and also a shape covering the end portion 75 of the first interface K1 and the groove 77.

Here, a second molded body 81 composed of a single second cylindrical portion 83 is illustrated, but as described later, in a similar manner to the first molded body 71, a second molded body 81 composed of a plurality of second cylindrical portions 83 may be formed by sequentially forming a plurality of second cylindrical portion 83.

Furthermore, in the second step, when the second resin is supplied from the second modeling nozzle 11B to produce the second cylindrical portion 83 (that is, the second molded body 81), high-pressure gas is injected from the injection nozzle 35 toward the second cylindrical portion 83.

The injection direction and injection position of the high-pressure gas are controlled by the second arm device 37 that holds the injection nozzle 35. That is, because the drive state, such as the position of the second modeling nozzle 11B, is known, the injection nozzle 35 is moved along the moving direction of the second modeling nozzle 11B while injecting the high-pressure gas from the injection nozzle 35. That is, the injection nozzle 35 is driven so as to inject the high-pressure gas along the second cylindrical portion 83 supplied from the second modeling nozzle 11B and which gradually solidifies, that is, toward the soft cylindrical second resin which becomes the second cylindrical portion 83.

As the injection direction of the high-pressure gas, for example, a direction inclined downward at a predetermined angle from the horizontal direction (for example, the XY plane) in a plane perpendicular to the second cylindrical portion 83 can be adopted. For example, as the injection angle, a range inclined downward from the horizontal direction by 45° ± 30° (for example, 45°) can be adopted.

As a result of setting such an injection direction, the gradually solidifying second cylindrical portion 83 can be pressed toward a boundary portion KB, which is a space surrounded by the cylindrical portions 73 and 83.

As the pressure during injection of the high-pressure gas (that is, the pressure that presses the surface of the second cylindrical portion 83), for example, a pressure that is 2 times atmospheric pressure or more (for example, 0.2 MPa or more in absolute pressure) can be adopted. That is, as the pressure when the high-pressure gas presses the second cylindrical portion 83, a pressure capable of pushing a portion of the gradually solidifying second resin into the boundary portion KB, or a pressure capable of moving or deforming the surface of the gradually solidifying second resin toward the pressing side, can be adopted.

As the high-pressure gas, air, nitrogen gas, CO₂ gas, or the like can be adopted.

In this way, by forming the second molded body 81 on the surface of the first molded body 71, a laminate 85 in which the second molded body 81 is laminated on the surface of the first molded body 71 can be obtained.

Note that in the first embodiment, when the second cylindrical portion 83 made of the second resin is produced, the high-pressure gas is injected against the second cylindrical portion 83, but a configuration in which the high-pressure gas is not injected can also be adopted.

### (Third Step: Step of Producing Welded Body)

In the third step, as shown in Fig. 3C, the first molded body 71 and the second molded body 81 are welded to produce a welded body 91 by heating with laser light.

Note that the welding also includes integrating the first molded body 71 and the second molded body 81 (that is, forming a resin product) by solidifying the resin by lowering the temperature of the resin after the resin is melted.

That is, the laser light is irradiated from the laser irradiation unit 31 along a path that passes from the second molded body 81 side through an irradiation region between the first molded body 71 and the second molded body 81 to the first molded body 71, which causes the first molded body 71 and the second molded body 81 to become welded together. Note that the irradiation region is the range to be irradiated with the laser light. That is, the irradiation region is a range set so that the laser light passes between the first molded body 71 and the second molded body 81 in a case where the laser light is irradiated from the second molded body 81 side toward the first molded body 71.

The irradiation direction and irradiation position of the laser light are controlled by the first arm device 33 that holds the laser irradiation unit 31. That is, because the position of the second molded body 81 (that is, the second cylindrical portion 83) on the first molded body 71 is known, the laser irradiation unit 31 is moved along the direction in which the second cylindrical portion 83 extends while irradiating the laser light from the laser irradiation unit 31.

As the irradiation direction of the laser light, as shown enlarged in Fig. 4C, for example, a direction inclined downward at a predetermined angle from the horizontal direction (for example, the XY plane) in a plane perpendicular to the second cylindrical portion 83 can be adopted. For example, as the irradiation angle, a range inclined downward from the horizontal direction by 45° ± 30° (for example, 45°) can be adopted.

As the range to be irradiated with the laser light, that is, the irradiation region when viewed from the direction in which the second cylindrical portion 83 extends (for example, the Y-axis direction), examples include a region that includes an interface at which the first cylindrical portion 73 of the first molded body 71 and the second cylindrical portion of the second molded body abut each other (that is, a second interface K2, which is an interface composed of resins having different characteristics). Examples include a region between a pair of second interfaces K2 with which a certain second cylindrical portion 83 is in contact, and which is sandwiched by the pair of second interfaces K2 (for example, a region including the boundary portion KB).

In this way, when the laser light is irradiated onto the irradiation region, the laser light passes through the second cylindrical portion 83 made of the second resin having a high laser light transmissivity, and is absorbed by the first cylindrical portion 73 made of the first resin having a high laser light absorption property. As a result, in particular, the surface temperature of the first cylindrical portion 73 rises, and the surface of the first cylindrical portion 73 gradually melts.

In addition, because heat on the surface of the first cylindrical portion 73 is transmitted to the second cylindrical portion 83 that is making contact via the second interface K2, the surface temperature of the second cylindrical portion 83 rises, and the surface of the second cylindrical portion 83 also gradually melts.

As a result, both resins of the cylindrical portions 73 and 83 that are in contact at the second interface K2 melt and mix with each other, and at the same time, both of the molten resins enter the space of the boundary portion KB and are integrally mixed. Then, by ending the irradiation of the laser light, the temperatures of both resins decrease, and an integrated compatible portion SB is formed. That is, both cylindrical portions 73 and 83 are firmly joined and integrated at the second interface K2 and the compatible portion SB. Note that, depending on the amount of both resins that melt, a partial space may remain in the boundary portion KB.

In this way, as a result of the irradiation of the laser light, or more specifically, by cooling to room temperature or the like after the irradiation of the laser light, the welded body 91 in which the first molded body 71 and the second molded body 81 are welded can be obtained. Note that the welded body 91, that is, the welded body 91 in which the molten portion has solidified after the temperature has decreased, corresponds to the resin product.

Also, in the first embodiment, when irradiating the laser light, the high-pressure gas is injected against the second cylindrical portion 83 in the same manner as in the second step. That is, while irradiating the laser light, the high-pressure gas is injected from the injection nozzle 35 toward the second cylindrical portion 83.

As the injection direction and injection position of the high-pressure gas, the same conditions as those of the second step can be adopted, and the conditions are controlled by the second arm device 37 that holds the injection nozzle 35.

When injecting the high-pressure gas, an injection direction capable of injecting the high-pressure gas at an irradiation position of an irradiation target to be irradiated with the laser light (that is, an irradiation position on the second cylindrical portion 32) is adopted. Specifically, in terms of the relationship between the irradiation direction of the laser light and the injection direction of the high-pressure gas, although there are cases where the directions are coaxial, cases where the directions are parallel, and cases where the directions are at a predetermined angle (that is the laser light irradiation and high-pressure gas injection are performed toward the same position from different directions), among these cases, it is preferable that the irradiation direction of the laser light and the injection direction of the high-pressure gas are close to being coaxial. Note that if the directions are not coaxial, it is preferable to perform the irradiation of the laser light and the injection of the high-pressure gas as close as possible to each other so that the high-pressure gas can be injected at the position irradiated with the laser light.

Furthermore, the injection of the high-pressure gas is performed simultaneously with the irradiation of the laser light. That is, the high-pressure gas is injected while the laser light is being irradiated. Note that the injection of the high-pressure gas may be started before the irradiation of the laser light.

The pressure during injection of the high-pressure gas is the same as that in the second step, but because the second cylindrical portion 83 against which the high-pressure gas is injected is in a solidified state, a pressure higher than that in the second step is preferable.

That is, by irradiating the laser light, surfaces of the first molded body 71 and the second molded body 81 melt, and thus the bonding properties between the first molded body 71 and the second molded body 81 may be temporarily reduced. Therefore, the high-pressure gas is injected so as to press the second cylindrical portion 83 toward the first molded body 71 side so that the first molded body 71 and the second molded body 81 do not separate when the surfaces of the first molded body 71 and the second molded body 81 melt.

Note that, as the injection direction of the high-pressure gas, in the same manner as the irradiation direction of the laser light, a blowing direction from, for example, the upper right of Fig. 4C toward the second cylindrical portion 83 can be adopted, but a blowing direction from a rear side of the first molded body 71 opposite to the second cylindrical portions 83 (for example, the lower left of Fig. 4C) can be adopted. In this case, the gas may be blown from both front and back sides of the first molded body 71 in parallel (e.g., coaxially) so as to sandwich the second cylindrical portion 83. Note that the gas may be blown from only one of the front side and the back side of the first molded body 71.

Note that in the first embodiment, when the laser light is irradiated, the high-pressure gas is injected against the second cylindrical portion 83, but a configuration in which the high-pressure gas is not injected can also be adopted.

### [1-4. Control Processing]

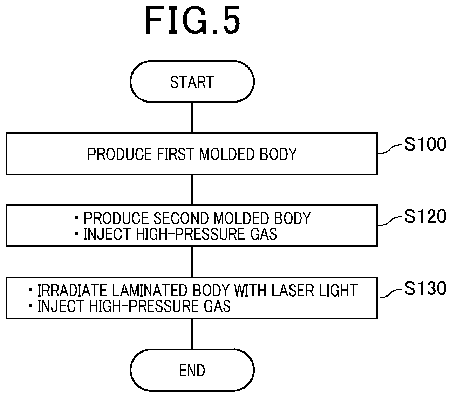

Next, the processing performed in the first embodiment will be described based on the flowchart in Fig. 5.

The present processing is processing performed by the arithmetic processing unit 41.

As shown in Fig. 5, in step (hereinafter, represented by S) 100, the 3D printer 3 is driven to output the first resin from the first modeling nozzle 11A, thereby producing the first molded body 71 composed of a plurality of first cylindrical portions 73.

In the following S110, the 3D printer 3 is driven to output the first resin onto the surface of the first molded body 71 from the second modeling nozzle 11B, thereby producing the second molded body 81 composed of the second cylindrical portion 83.

Furthermore, when the second cylindrical portion 83 is produced, the injection nozzle 35 and the second arm device 37 are driven to inject the high-pressure gas against the second cylindrical portion 83.

In the following S120, the laser irradiation unit 31 and the first arm device 33 are driven to irradiate the first molded body 71 with laser light through the second molded body 81. At the same time, the injection nozzle 35 and the second arm device 37 are driven to inject the high-pressure gas against the second cylindrical portion 83. As a result, the first molded body 71 and the second molded body 81 are welded together, and the processing temporarily ends.

### [1-5. Effects]

According to the first embodiment, the following effects are obtained.

(1a) In the first embodiment, the first molded body 71 is produced using a first resin having laser light absorption properties, and the second molded body 81 is produced so as to be laminated on the first molded body 71 by supplying a second resin having laser light transmissivity to the surface of the first molded body 71. Then, the laser light is irradiated along a path that passes from the second molded body 81 side through an irradiation region between the first molded body 71 and the second molded body 81 to the first molded body 71, which causes the first molded body 71 and the second molded body 81 to become welded together.

As a result of such a configuration, the strength of a resin product produced using the fused deposition modeling-type 3D printer 3 can be increased.

That is, in the first embodiment, the first molded body 71 made of the first resin can be effectively heated by irradiating the laser light along a path that passes from the second molded body 81 side through the irradiation region (for example, a region including the second interface K2) between the first molded body 71 and the second molded body 81 to the first molded body 71. As a result, it is possible to mainly melt the surface of the first molded body 71. In addition, because the second molded body 81 is laminated on the first molded body 71, the heat of the heated first molded body 71 is transmitted to the second molded body 81 via the second interface K2 or the like. Consequently, because the surface of the second molded body 81 can be heated, the surface of the second molded body 81 can also be melted. In this way, as a result of the first molded body 71 and the second molded body 81 melting, the first molded body 71 and the second molded body 81 can be welded together.

Further, by welding the first molded body 71 and the second molded body 81 in this way, a resin product is obtained in which the first molded body 71 and the second molded body 81 are firmly joined to each other.

(1b) In the first embodiment, when supplying the second resin to the surface of the first molded body 71, high-pressure gas is blown against the supplied second resin so as to press the second resin toward the first molded body 71 side.

As a result, because the adhesion between the first molded body 71 and the second molded body is improved, there is an advantage that the strength of the manufactured resin product is improved.

In the first embodiment, when welding the first molded body 71 and the second molded body 81, high-pressure gas is blown against the surface of the second molded body 81 so as to press the second molded body 81 toward the first molded body 71 side.

As a result, because the adhesion between the first molded body 71 and the second molded body is improved, there is an advantage that the strength of the manufactured resin product is improved.

(1d) In the first embodiment, in a case where the second molded body 81 is laminated on the first molded body 71, the second resin is supplied along the end portion 75 of the first interface K1 of the first molded body 71 in a shape covering the end portion 75 of the first interface K1, and in a case where welding is performed, the second molded body 81 is welded to the first molded body 71 in a range sandwiching the end portion 75 of the first interface K1 of the first molded body 71.

That is, in the first embodiment, because the second resin is supplied along the end portion 75 of the first interface K1 where strength easily decreases, and the second molded body 81 is welded to the first molded body 71 in a range sandwiching the end portion 75 of the first interface K1 of the first molded body 71, there is an advantage that the strength of the manufactured resin product is improved.

### [1-6. Correspondence Relationships]

Next, the relationships between the first embodiment and the present disclosure will be described.

The manufacturing device 1 corresponds to the manufacturing device, the 3D printer 3 corresponds to the three-dimensional printer, the laser device 5 corresponds to the laser device, the gas device 7 corresponds to the gas device, the laser irradiation unit 31 corresponds to the laser irradiation unit, the first molded body 71 corresponds to the first molded body, and the second molded body 81 corresponds to the second molded body.

### [1-7. Modifications]

### <First Modification>

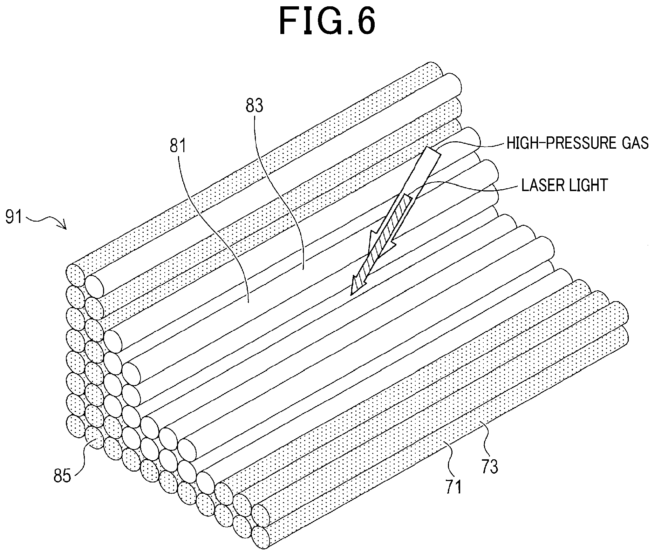

As shown in Fig. 6, in a first modification, the first molded body 71 has a configuration in which a plurality of first cylindrical portions 73 are laminated, and the second molded body 81 also has a configuration in which a plurality of second cylindrical portions 83 are laminated.

In the first modification, in a case where the welded body 91 is manufactured from the laminate 85, in a similar manner to the first embodiment described above, the laser light is irradiated and the high-pressure gas is injected from the upper left of Fig. 6 in which a plurality of second cylindrical portions 83 are laminated.

As a result, the same effects as those of the first embodiment are exhibited.

### <Second Modification>

In the first embodiment, the first modeling nozzle 11A that outputs the first resin and the second modeling nozzle 11B that outputs the second resin are used, but a single modeling nozzle may be used.

For example, after producing the first molded body 71 by supplying the first resin to the first modeling nozzle 11A, the first resin may be removed from the first modeling nozzle 11A, and then the second resin may be supplied to the first modeling nozzle 11A to produce the second molded body 81.

As a result, the same effects as those of the first embodiment are exhibited.

### <Third Modification>

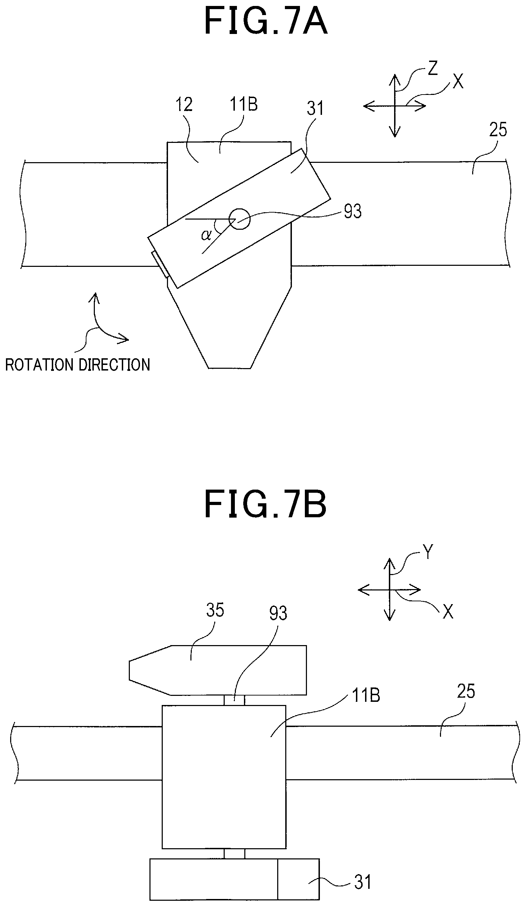

In the first embodiment, the laser irradiation unit 31 and the injection nozzle 35 are attached to the front end of the robot arm, but as shown in Fig. 7, the laser irradiation unit 31 and the injection nozzle 35 may be attached to the modeling nozzle (for example, the second modeling nozzle 11B).

For example, as shown in Fig. 7B, the laser irradiation unit 31 and the injection nozzle 35 may be attached to both sides in the Y-axis direction of the second modeling nozzle 11B. In this case, a rotation shaft 93 extending in the Y-axis direction may be provided in the second modeling nozzle 11B, and the laser irradiation unit 31 and the injection nozzle 35 may be attached to the rotation shaft 93.

The laser irradiation unit 31 and the injection nozzle 35 may be rotatable around the rotation shaft 93 by a predetermined angle α (for example, an arbitrary angle oriented downward from the horizontal direction in Fig. 7A).

Note that the angles of the laser irradiation unit 31 and the injection nozzle 35 can be set to arbitrary angles by configurations such as motors and gears (not shown).

With such a configuration, by moving the second modeling nozzle 11B, which is freely movable in a three-dimensional direction, the laser irradiation unit 31 and the injection nozzle 35 can also be moved to an arbitrary position in the three-dimensional direction.

In addition, the irradiation angle of the laser light and the injection direction of the high-pressure gas can be set to desired angles by adjusting the rotation angles of the laser irradiation unit 31 and the injection nozzle 35.

Note that, instead of attaching the laser irradiation unit 31 and the injection nozzle 35 to the second modeling nozzle 11B, a moving device similar to a moving device 12 (that is, a moving device that moves the second modeling nozzle 11B) on the upper portion of the second modeling nozzle 11B may be installed on the X-axis member 25, and the laser irradiation unit 31 and the injection nozzle 35 may be attached to the moving device.

### [2. Second Embodiment]

Because the basic configuration of the second embodiment is the same as that of the first embodiment, the differences from the first embodiment will be mainly described below. Note that the same reference signs those in the first embodiment indicate like configurations, and refer to the previous descriptions.

In the second embodiment, a method for producing the second molded body 81 is different from the first embodiment.

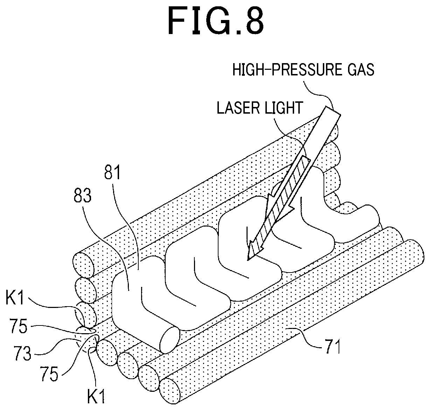

As shown in Fig. 8, in the second embodiment, the second resin is supplied from the second modeling nozzle 11B in a string-like shape (for example, cylindrical shape) to a surface of the first molded body 71 that is equivalent to that of the first embodiment, and more specifically, the inside of a section bent at a right angle of the first molded body 71 (that is, the side having a small angle).

At this time, the second resin is supplied so as to span a horizontal section and a vertical section of the first molded body 71, and the second cylindrical portion 83 having a shape spanning the horizontal section and the vertical section is formed.

That is, in a case where the second molded body 81 is laminated on the first molded body 71, the second resin is supplied in a shape that spans the end portions 75 of a pair of first interfaces K1 (that is, the end portions 75 of a pair of first interfaces K1) of a certain first cylindrical portion 73 (that is, a first cylindrical portion 73 at a corner portion), thereby forming the second cylindrical portion 83.

That is, in the second embodiment, the second resin is supplied in a meandering fashion so as to span the horizontal section and the vertical section of the first molded body 71 a plurality of times, and the second cylindrical portion 83 having a shape meandering and spanning the horizontal section and the vertical section many times is formed.

In addition, after forming the second cylindrical portion 83 (that is, the second molded body 81), laser light is irradiated onto the irradiation region and high-pressure gas is injected toward the second cylindrical portion 83 in the same manner as in the first embodiment, thereby welding the first molded body 71 and the second molded body 81 together.

Note that, in the second embodiment, when producing the second molded body 81, a second modeling nozzle 11B having the same configuration as that of the first embodiment can be used, but in order to easily produce the second molded body 81 having a shape meandering in the horizontal and vertical directions, a second modeling nozzle 11B whose injection direction can be freely set may be used.

For example, as described above, the moving device may be attached to the X-axis member 25, and the second modeling nozzle 11B may be attached to the moving device so as to be rotatable in a desired direction (for example, rotatable around the Z-axis and the Y-axis). Note that the second modeling nozzle 11B can be rotatably driven by configurations such as motors and gears.

Also, in addition to this, the second modeling nozzle 11B may be attached to the front end of a robot arm to produce the meandering second cylindrical portion 83 described above.

Note that, as the conditions for laser light irradiation (for example, the irradiation direction and irradiation timing) and conditions for high-pressure gas injection (for example, the injection direction, injection timing, and pressure), the same conditions as those in the first embodiment can be adopted.

The second embodiment exhibits the same effects as those of the first embodiment. Further, in the second embodiment, because the second cylindrical portion 83 is formed so as to span the horizontal section and the vertical section of the first molded body 71, there is an advantage that the strength of the section where the strength easily decreases (for example, the section that is bent at a right angle) can be increased.

### [3. Third Embodiment]

Because the basic configuration of the third embodiment is the same as that of the first embodiment, the differences from the first embodiment will be mainly described below. Note that the same reference signs those in the first embodiment indicate like configurations, and refer to the previous descriptions.

In the third embodiment, separate devices are used for production of the first molded body 71 and production of the second molded body 81.

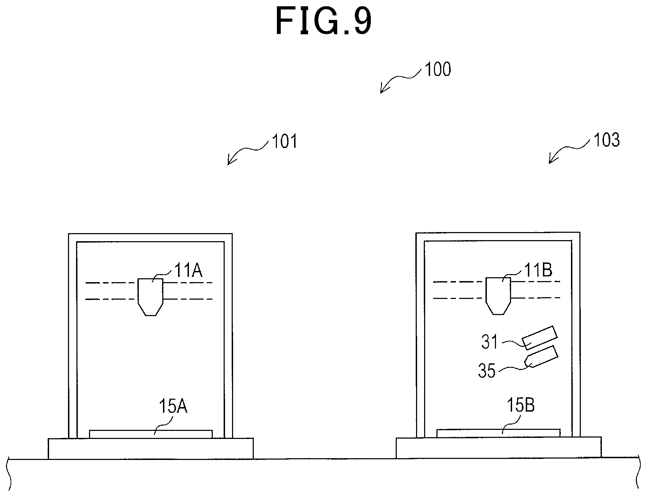

In the third embodiment, as shown in Fig. 9, a manufacturing device 100 includes: a molding device 101 having a function of a fused deposition modeling-type 3D printer used to produce the first molded body 71; and a lamination device 103 having a function of a fused deposition modeling-type 3D printer used to produce the second molded body 81.

The molding device 101 includes the same first modeling nozzle 11A as that of the first embodiment. Therefore, by outputting the first resin from the first modeling nozzle 11A, the first molded body 71 can be produced on the first modeling stage 15A.

The lamination device 103 includes the same second modeling nozzle 11B, laser irradiation unit 31, and injection nozzle 35 as those of the first embodiment. Therefore, the first molded body 71 taken out from the molding device 101 is placed on the second modeling stage 15B, and the second resin is output from the second modeling nozzle 11B onto the surface of the first molded body 71, thereby enabling the second molded body 81 to be laminated on the surface of the first molded body 71.

Further, in the same manner as the first embodiment, by irradiating the laser light and injecting the high-pressure gas, the first molded body 71 and the second molded body 81 can be welded together.

Note that, as the conditions for laser light irradiation (for example, the irradiation direction and irradiation timing) and conditions for high-pressure gas injection (for example, the injection direction, injection timing, and pressure), the same conditions as those in the first embodiment can be adopted.

The third embodiment exhibits the same effects as those of the first embodiment. Further, in the third embodiment, because separate devices are used for production of the first molded body 71 and production of the second molded body 81, there is an advantage that a degree of freedom in the manufacturing steps increases.

### [4. Other Embodiments]

Embodiments of the present disclosure have been described above, but the present disclosure is not limited to the above embodiments, and can of course take various forms.

(4a) The operations of the manufacturing device described in the present disclosure may be realized by a dedicated computer provided by configuring a processor and a memory programmed to execute one or a plurality of functions embodied by a computer program.

Alternatively, the operations of the manufacturing device described in the present disclosure may be realized by a dedicated computer provided by configuring a processor with one or more dedicated hardware logic circuits.

Alternatively, the operations of the manufacturing device described in the present disclosure may be realized by one or more dedicated computers configured by a combination of a processor and a memory programmed to execute one or a plurality of functions, and a processor configured by one or more hardware logic circuits.

Furthermore, the computer program may be stored as instructions executed by a computer on a computer-readable, non-transitory, tangible recording medium. The method of realizing the functions of the manufacturing device does not necessarily need to include software, and all of the functions may be realized using one or more pieces of hardware.

(4b) In addition to the manufacturing device described above, the present disclosure can also be realized in various forms such as a configuration including the manufacturing device as a component, a program for causing a computer of the manufacturing device to function, a non-transitory, tangible recording medium such as a semiconductor memory recording the program, and a manufacturing method.

(4c) A plurality of functions of a single component in each of the above embodiments may be realized by a plurality of components, or a single function of a single component may be realized by a plurality of components. Furthermore, a plurality of functions of a plurality of components may be realized by a single component, or a single function realized by a plurality of components may be realized by a single component. In addition, a portion of the configuration of each of the above embodiments may be omitted. Also, at least a portion of the configuration of each of the above embodiments may be added to or replaced with a configuration of another embodiment.

### [Technical Ideas Disclosed in the Present Specification]

### [First Aspect]

A method for manufacturing a resin product using a fused deposition modeling-type three-dimensional printer (3) that produces a molded body by supplying a molten resin in a string-like shape from a modeling nozzle (11), the method comprising:
producing a first molded body (71) using a first resin having laser light absorption properties;
producing a second molded body (81) by supplying a second resin having laser light transmissivity to a surface of the first molded body so as to be laminated on the first molded body; and
welding the first molded body and the second molded body by irradiating laser light along a path that extends from the second molded body side to the first molded body through an irradiation region between the first molded body and the second molded body.

### [Second Aspect]

The method for manufacturing a resin product according to the first aspect, wherein
in a case where the second resin is supplied to a surface of the first molded body, a pressing gas is blown against the supplied second resin to press the second resin toward the first molded body side.

### [Third Aspect]

The method for manufacturing a resin product according to the first or second aspect, wherein
in a case where the first molded body and the second molded body are welded to each other, a pressing gas is blown against a surface of the second molded body to press the second molded body toward the first molded body side, and/or against a surface of the first molded body to press the first molded body toward the second molded body side.

### [Fourth Aspect]

The method for manufacturing a resin product according to any one of the first to third aspects, wherein
the first molded body has an interface in which a plurality of string-like sections composed of the first resin are abutting thereto, and in which an end portion of the interface is exposed on a surface of the first molded body,
in a case where the second molded body is laminated on the first molded body, the second resin is supplied in a shape that spans the end portion of the interface of the first molded body, and
in a case where the welding is performed, the second molded body is welded to the first molded body in a range that sandwiches the end portion of the interface of the first molded body.

### [Fifth Aspect]

The method for manufacturing a resin product according to any one of the first to third aspects, wherein
the first molded body has an interface in which a plurality of string-like sections composed of the first resin are abutting thereto, and in which an end portion of the interface is exposed on a surface of the first molded body,
in a case where the second molded body is laminated on the first molded body, the second resin is supplied in a shape that covers the end portion of the interface of the first molded body along the end portion of the interface, and
in a case where the welding is performed, the second molded body is welded to the first molded body in a range that sandwiches the end portion of the interface of the first molded body.

### [Sixth Aspect]

A manufacturing device (1) for a resin product using a fused deposition modeling-type three-dimensional printer (3) that produces a molded body by supplying a molten resin in a string-like shape from a modeling nozzle (11) including a first modeling nozzle (11A) and a second modeling nozzle (11B), wherein
the three-dimensional printer includes
a molding control unit (S100) that controls an operation of the first modeling nozzle, and produces a first molded body (71) by supplying a first resin that has laser light absorption properties, and
a lamination control unit (S110) that controls an operation of the second modeling nozzle, and produces a second molded body (81) that is laminated on the first molded body by supplying a second resin that has laser light transmissivity to a surface of the first molded body,
the manufacturing device includes
a laser device (5) that has a laser irradiation unit (31) that irradiates laser light, and
the laser device includes
a laser control unit (S120) that controls an operation of the laser irradiation unit, and welds the first molded body and the second molded body to each other by irradiating the laser light along a path that extends from the second molded body side to the first molded body through an irradiation region between the first molded body and the second molded body.

### [Seventh Aspect]

A manufacturing device (100) for a resin product using a fused deposition modeling-type three-dimensional printer that produces a molded body by supplying a molten resin in a string-like shape from a modeling nozzle (11) including a first modeling nozzle (11A) and a second modeling nozzle (11B), wherein
as the three-dimensional printer, provided are
a molding device (101) having a molding control unit (S100) that controls an operation of the first modeling nozzle, and produces a first molded body (71) by supplying a first resin that has laser light absorption properties, and
a lamination device (103) having a lamination control unit (S110) that controls an operation of the second modeling nozzle, and produces a second molded body (81) that is laminated on the first molded body by supplying a second resin that has laser light transmissivity to a surface of the first molded body,
the lamination device includes
a laser device (5) that has a laser irradiation unit (31) that irradiates laser light, and
the laser device includes
a laser control unit (S120) that controls an operation of the laser irradiation unit, and welds the first molded body and the second molded body to each other by irradiating the laser light along a path that extends from the second molded body side to the first molded body through an irradiation region between the first molded body and the second molded body.

### [Eighth Aspect]

The manufacturing device for a resin product according to the sixth or seventh aspect, comprising
a gas device (7), being a device used in a case where the second resin is supplied to a surface of the first molded body, that blows a pressing gas against the supplied second resin to press the second resin toward the first molded body side.

### [Ninth Aspect]

The manufacturing device for a resin product according to any one of the sixth to eighth aspects, comprising
a gas device, being a device used in a case where the first molded body and the second molded body are welded to each other, that blows a pressing gas against a surface of the second molded body to press the second molded body toward the first molded body side, and/or against a surface of the first molded body to press the first molded body toward the second molded body side.

### [Tenth Aspect]

The manufacturing device for a resin product according to any one of the sixth to ninth aspects, wherein
the first molded body has an interface in which a plurality of string-like sections composed of the first resin are abutting thereto, and in which an end portion of the interface is exposed on a surface of the first molded body,
the lamination control unit, in a case where the second molded body is laminated on the first molded body, controls an operation of the modeling nozzle, and supplies the second resin in a shape that spans the end portion of the interface of the first molded body, and
the laser control unit controls an operation of the laser irradiation unit, and welds the second molded body to the first molded body in a range that sandwiches the end portion of the interface of the first molded body.

### [Eleventh Aspect]

The manufacturing device for a resin product according to any one of the sixth to ninth aspects, wherein
the first molded body has an interface in which a plurality of string-like sections composed of the first resin are abutting thereto, and in which an end portion of the interface is exposed on a surface of the first molded body,
the lamination control unit, in a case where the second molded body is laminated on the first molded body, controls an operation of the modeling nozzle, and supplies the second resin in a shape that covers the end portion of the interface of the first molded body along the end portion of the interface, and
the laser control unit, in a case where the first molded body and the second molded body are welded to each other, welds the second molded body to the first molded body in a range that sandwiches the end portion of the interface of the first molded body

## Claims

1. A method for manufacturing a resin product using a fused deposition modeling-type three-dimensional printer (3) that produces a molded body by supplying a molten resin in a string-like shape from a modeling nozzle (11), the method comprising:
producing a first molded body (71) using a first resin having laser light absorption properties;
producing a second molded body (81) by supplying a second resin having laser light transmissivity to a surface of the first molded body so as to be laminated on the first molded body; and
welding the first molded body and the second molded body by irradiating laser light along a path that extends from the second molded body side to the first molded body through an irradiation region between the first molded body and the second molded body.

2. The method for manufacturing a resin product according to claim 1, wherein
in a case where the second resin is supplied to a surface of the first molded body, a pressing gas is blown against the supplied second resin to press the second resin toward the first molded body side.

3. The method for manufacturing a resin product according to claim 1 or 2, wherein
in a case where the first molded body and the second molded body are welded to each other, a pressing gas is blown against a surface of the second molded body to press the second molded body toward the first molded body side, and/or against a surface of the first molded body to press the first molded body toward the second molded body side.

4. The method for manufacturing a resin product according to claim 1, wherein
the first molded body has an interface in which a plurality of string-like sections composed of the first resin are abutting thereto, and in which an end portion of the interface is exposed on a surface of the first molded body,
in a case where the second molded body is laminated on the first molded body, the second resin is supplied in a shape that spans the end portion of the interface of the first molded body, and
in a case where the welding is performed, the second molded body is welded to the first molded body in a range that sandwiches the end portion of the interface of the first molded body.

5. The method for manufacturing a resin product according to claim 1, wherein
the first molded body has an interface in which a plurality of string-like sections composed of the first resin are abutting thereto, and in which an end portion of the interface is exposed on a surface of the first molded body,
in a case where the second molded body is laminated on the first molded body, the second resin is supplied in a shape that covers the end portion of the interface of the first molded body along the end portion of the interface, and
in a case where the welding is performed, the second molded body is welded to the first molded body in a range that sandwiches the end portion of the interface of the first molded body.

6. A manufacturing device (1) for a resin product using a fused deposition modeling-type three-dimensional printer (3) that produces a molded body by supplying a molten resin in a string-like shape from a modeling nozzle (11) including a first modeling nozzle (11A) and a second modeling nozzle (11B), wherein
the three-dimensional printer includes
a molding control unit (S100) that controls an operation of the first modeling nozzle, and produces a first molded body (71) by supplying a first resin that has laser light absorption properties, and
a lamination control unit (S110) that controls an operation of the second modeling nozzle, and produces a second molded body (81) that is laminated on the first molded body by supplying a second resin that has laser light transmissivity to a surface of the first molded body,
the manufacturing device includes
a laser device (5) that has a laser irradiation unit (31) that irradiates laser light, and
the laser device includes
a laser control unit (S120) that controls an operation of the laser irradiation unit, and welds the first molded body and the second molded body to each other by irradiating the laser light along a path that extends from the second molded body side to the first molded body through an irradiation region between the first molded body and the second molded body.

7. A manufacturing device (100) for a resin product using a fused deposition modeling-type three-dimensional printer that produces a molded body by supplying a molten resin in a string-like shape from a modeling nozzle (11) including a first modeling nozzle (11A) and a second modeling nozzle (11B) , wherein
as the three-dimensional printer, provided are
a molding device (101) having a molding control unit (S100) that controls an operation of the first modeling nozzle, and produces a first molded body (71) by supplying a first resin that has laser light absorption properties, and
a lamination device (103) having a lamination control unit (S110) that controls an operation of the second modeling nozzle, and produces a second molded body (81) that is laminated on the first molded body by supplying a second resin that has laser light transmissivity to a surface of the first molded body,
the lamination device includes
a laser device (5) that has a laser irradiation unit (31) that irradiates laser light, and
the laser device includes
a laser control unit (S120) that controls an operation of the laser irradiation unit, and welds the first molded body and the second molded body to each other by irradiating the laser light along a path that extends from the second molded body side to the first molded body through an irradiation region between the first molded body and the second molded body

8. The manufacturing device for a resin product according to claim 6 or 7, comprising
a gas device (7), being a device used in a case where the second resin is supplied to a surface of the first molded body, that blows a pressing gas against the supplied second resin to press the second resin toward the first molded body side.

9. The manufacturing device for a resin product according to claim 6 or 7, comprising
a gas device, being a device used in a case where the first molded body and the second molded body are welded to each other, that blows a pressing gas against a surface of the second molded body to press the second molded body toward the first molded body side, and/or against a surface of the first molded body to press the first molded body toward the second molded body side.

10. The manufacturing device for a resin product according to claim 6 or 7, wherein
the first molded body has an interface in which a plurality of string-like sections composed of the first resin are abutting thereto, and in which an end portion of the interface is exposed on a surface of the first molded body,
the lamination control unit, in a case where the second molded body is laminated on the first molded body, controls an operation of the modeling nozzle, and supplies the second resin in a shape that spans the end portion of the interface of the first molded body, and
the laser control unit controls an operation of the laser irradiation unit, and welds the second molded body to the first molded body in a range that sandwiches the end portion of the interface of the first molded body.

11. The manufacturing device for a resin product according to claim 6 or 7, wherein
the first molded body has an interface in which a plurality of string-like sections composed of the first resin are abutting thereto, and in which an end portion of the interface is exposed on a surface of the first molded body,
the lamination control unit, in a case where the second molded body is laminated on the first molded body, controls an operation of the modeling nozzle, and supplies the second resin in a shape that covers the end portion of the interface of the first molded body along the end portion of the interface, and
the laser control unit, in a case where the first molded body and the second molded body are welded to each other, welds the second molded body to the first molded body in a range that sandwiches the end portion of the interface of the first molded body.
